# EUROPEAN PATENT SPECIFICATION

(11) **EP 4 001 632 B1**
(45) Date of publication and mention of the grant of the patent: **06.09.2023**
(21) Application number: 21207415.7
(22) Date of filing: 10.11.2021
(51) Int. Cl.: F03B 7/00, F03B 5/00

(54) **PADDLE WHEEL, APPARATUS COMPRISING SAID PADDLE WHEEL FOR TRANSFORMING MECHANICAL ENERGY OF A LIQUID FLOW AND PLANT COMPRISING THE APPARATUS**
SCHAUFELRAD UND VORRICHTUNG BEINHALTEND DAS SCHAUFELRAD ZUR UMWANDLUNG VON MECHANISCHER ENERGIE EINES FLÜSSIGKEITSSTROMES UND EIN KRAFTWERK UMFASSEND DIE VORRICHTUNG
ROUE À PALETTES ET APPAREIL COMPRENANT LADITE ROUE À PALETTES POUR TRANSFORMER L'ENERGIE MECANIQUE D'UN FLUX LIQUIDE ET INSTALLATION COMPRENANT L'APPAREIL

(30) Priority: 11.11.2020 IT 202000026933
(43) Date of publication of application: 25.05.2022
(73) Proprietor: MDE Research S.r.l., 35028 Piove di Sacco (PD) (IT)
(72) Inventor: PIASENTA', Marino, 35028 Piove di Sacco PD (IT)
(74) Representative: De Giorgi, Michele

(56) References cited:
- DE-U1-202012 008 703
- DE-U1-202015 106 402
- US-A1- 2012 038 163

## Description

### TECHNICAL SECTOR

The present invention relates to a paddle wheel, an apparatus for converting mechanical energy of a liquid flow comprising said paddle wheel, and a plant comprising said apparatus.

In particular the present invention provides an apparatus with improved efficiency for converting the kinetic energy of a liquid flow.

In particular, this apparatus is able to convert the mechanical energy of a liquid flow into electrical energy or supply this mechanical energy to an operating apparatus such as a mill or the like.

### PRIOR ART

Apparatus equipped with paddle wheels interacting with a water flow have been widely used to convert or transfer the mechanical energy of this flow so that it is available for the operation of further energy generating apparatus or apparatus for mechanically processing products, for example for milling cereals or for working metals.

Generally, these apparatus are equipped with a wheel having a hub for the mechanical transmission of its rotation and a plurality of paddles fixed to its radial periphery so as to interact with the water flow.

The hub may be connected to a transmission device designed to transfer the mechanical energy received from the hub to a user apparatus.

In general such conventional apparatus have been used especially for the operation of mill grindstones, for example for milling cereals and, nowadays, they have been superseded by the use of electric motors in such applications owing to their limited performance efficiency.

The document DE202015106402 describes a conventional apparatus with a converging nozzle designed to inject a water jet into the chamber of a paddle wheel in order to rotationally drive it.

### SUMMARY OF THE INVENTION

The problem underlying the present invention is that of improving the mechanical efficiency of a conventional paddle wheel and an apparatus for converting mechanical energy of a liquid flow comprising said paddle wheel, while maintaining its traditional appearance.

The task of a paddle wheel and of an apparatus for converting mechanical energy of a liquid flow comprising said paddle wheel, according to the present invention, is therefore that of solving this problem.

In connection with this task one object of the invention is to propose a paddle wheel and an apparatus for converting mechanical energy of a liquid flow comprising said paddle wheel, which allows more efficient use of the mechanical energy received from a liquid flow with which it interacts.

In connection with this task, one object of the invention is to provide a paddle wheel and an apparatus for converting mechanical energy of a liquid flow comprising said paddle wheel which may be easily made using known production technologies.

Yet another object of the present invention is to propose a paddle wheel and an apparatus for converting mechanical energy of a liquid flow comprising said paddle wheel which is structurally simple, easy to use and may be easily adapted to pre-existing installations.

This task, as well as these and other objects which will become clearer below are achieved by a paddle wheel, by an apparatus for converting mechanical energy of a liquid flow comprising said paddle wheel and by plants comprising such an apparatus, according to the attached independent claims.

Detailed characteristics of a paddle wheel, of an apparatus for converting mechanical energy of a liquid flow comprising said paddle wheel, and of plants comprising such an apparatus, according to the invention, are indicated in the dependent claims.

Further characteristic features and advantages will emerge more clearly from the description of a preferred, but non-exclusive embodiment of a paddle wheel, of an apparatus for converting mechanical energy of a liquid flow comprising said paddle wheel, and of plants comprising such an apparatus, according to the invention, illustrated in an embodiment thereof provided solely by way of a non-limiting example in the attached sets of drawings listed below.

### BRIEF DESCRIPTION OF THE DRAWINGS

- Figure 1 shows a perspective view of a paddle wheel, according to the invention;
- Figure 2 shows a perspective view of a detail of the water wheel according to Figure 1, relating to an arm of the paddle wheel;
- Figure 3 shows a side elevation view of the arm according to Figure 2;
- Figure 4 shows a simplified operating diagram of the wheel according to Figure 1.

### DETAILED DESCRIPTION

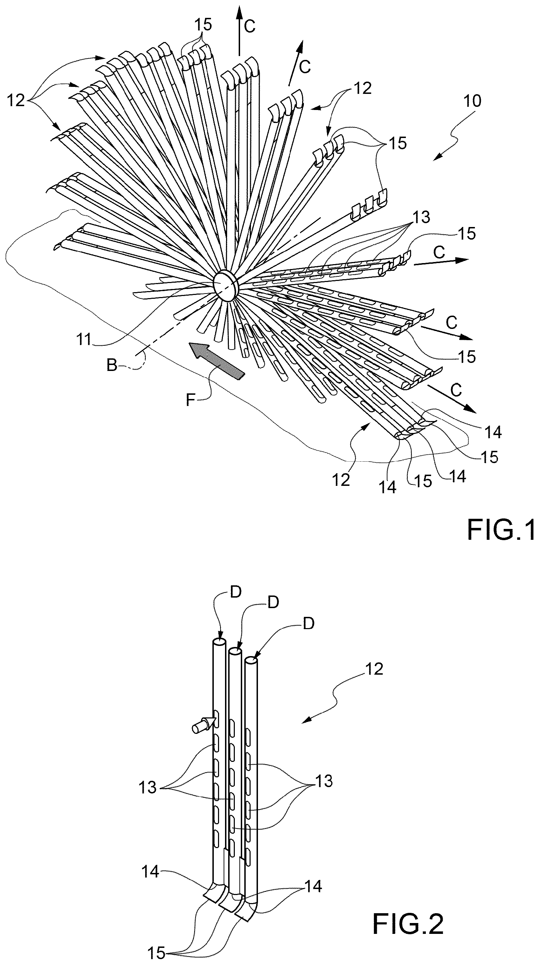

With particular reference to Figure 1, 10 denotes overall a paddle wheel for an apparatus for converting mechanical energy of a liquid flow.

The paddle wheel 10 has a direction of rotation A and comprises:
- a hub 11 which defines an axis of rotation B for the paddle wheel 10;
- a plurality of arms 12 which are fixed to the hub 11 for transmitting to it an actuating stress and which each extend in a radial direction C with respect to the axis of rotation B.

At least a first one of said arms 12 has:
- an internal cavity D
- at least one circumferential opening 13 which is in fluid communication with the internal cavity D and which is configured to direct a fluid crossing it and flowing out of the internal cavity D so that this fluid causes a rotation of the paddle wheel 10 in the direction of rotation A;
- possibly also at least one radial opening 14 which is in fluid communication with the internal cavity D and which extends in the radial direction C.

The first arm and preferably each arm 12 may comprise a deflector 15 which faces the radial opening 14 so as to deflect a fluid flow exiting the radial opening 14 such that it causes a rotation of the paddle wheel 10 in the direction of rotation A.

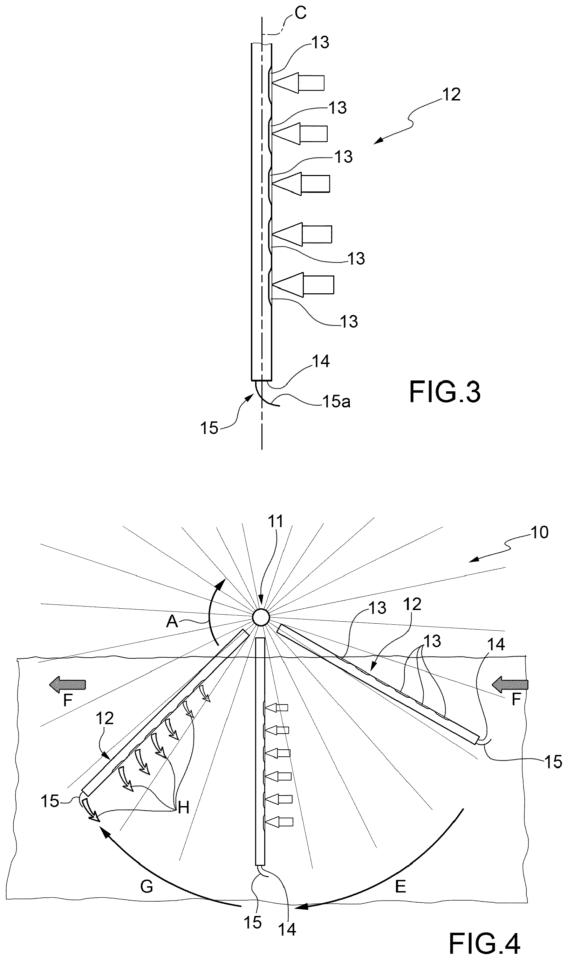

It can be understood, therefore, when the paddle wheel 10 is in operation with the axis of rotation B substantially horizontal and partially immersed in a flow F of liquid, as for example schematically shown in Figure 4, the liquid of the flow F acts on the arms 12, exerting thereon a stress which causes rotation of the paddle wheel 10 in the direction of rotation A.

At the same time, as an arm 12 is immersed in the flow F, along a downward trajectory E, the liquid tends to enter into its internal cavity D through the circumferential openings 13 and through the radial opening 14.

Once the fully immersed position is reached, underneath the hub 11, each arm 12 starts an upward trajectory G so as to then exit from the flow F.

Along the upward trajectory G, the liquid present in the internal cavity D tends to flow out of it and flow down along it owing to the force of gravity and the centrifugal action of the paddle wheel 10.

Thus the liquid flows out of the internal cavity D through the circumferential openings 13 and/or through the radial opening 14, producing a thrusting action of the arm 12 in the direction of rotation A.

This propulsive effect of the liquid exiting the internal cavity D, which is schematically indicated in Figure 4 by means of the arrows H, is able to improve substantially the efficiency of the paddle wheels 10 and, clearly, the energy efficiency of conversion of the mechanical energy of the liquid flow into the mechanical energy of the paddle wheel 10

Each circumferential opening 13 has a direction of extension which may extend circumferentially with respect to the axis of rotation B in a direction directed in a sense opposite to the sense of rotation A.

The deflector 15 may have a deflection surface 15a which is curved and which may face the circumferential opening 14 so as to deflect a fluid flow emerging from it.

The deflection surface 15a may have a first end aligned with the radial opening 14 and a second end which extends substantially in a circumferential direction with respect to the axis of rotation B, so as to deflect a fluid flow emerging from the radial opening 14 in a direction opposite to the direction of rotation A, so as to push the paddle wheel 10.

The internal cavity D may extend at least mainly along a radial direction C with respect to the axis of rotation B.

At least one of the said arms 12 and preferably each of the arms 12 has a plurality of internal cavities D which may be arranged alongside each other along the axis of rotation B.

This thus generates a plurality of thrusting flows, which push the paddle wheel 10, during the upward trajectory G.

For the sake of constructional simplicity, the first arm 12 and preferably each arm 12 comprises a plurality of tubes arranged alongside each other along the axis of rotation B and each defining the internal cavity D inside it.

Said tubes may have a circular cross-section or quadrilateral cross-section and may be rectilinear.

An open end of said tubes may define the radial opening 14.

The present invention also relates to an apparatus for converting mechanical energy of a liquid flow, which comprises:
- a paddle wheel 10;
- a user device designed to use a driving torque, such as a grindstone, an alternator or the like;
- a transmission unit, mechanically connected to the hub 11 of the paddle wheel 10 and the user device so as to transmit a driving torque from the hub 11 to said user device.

The present invention also relates to a plant for milling, for example cereals, which comprises:
- a milling apparatus, for example comprising at least one grindstone;
- a channel designed to convey a liquid flow F;
- an apparatus for converting mechanical energy of a liquid flow which has the hub 11 of the paddle wheel 10 connected to the milling apparatus so as to drive it.

The paddle wheel 10 engages with the channel so as to intercept a fluid flow which, during operation, flows along it, so that it is driven by said fluid flow in the direction of rotation A.

A plant for the production of electrical energy also forms the subject of the present invention.

Said plant comprises:
- a conversion apparatus designed to convert a driving torque into an electric voltage;
- a channel designed to convey a liquid flow;
- the apparatus for converting mechanical energy of a liquid flow, described further above, which has a paddle wheel 10, the hub 11 of which is connected to the conversion apparatus so as to drive it and which engages with the channel in order to intercept a fluid flow which flows along it so as to be driven by the latter along said direction of rotation A.

It can therefore be understood how a paddle wheel according to the present invention is able to achieve energy efficiency levels much higher than those of conventional paddle wheels, while maintaining a traditional appearance.

A paddle wheel, according to the present invention, in particular allows more efficient use of the mechanical energy received from a liquid flow with which it interacts.

Moreover, a paddle wheel and an apparatus for converting mechanical energy of a liquid flow comprising said paddle wheel may be easily manufactured using known production technologies and components which are simple to produce and assemble, without the need for particularly specialized labour.

A paddle wheel and an apparatus for converting mechanical energy of a liquid flow comprising said paddle wheel is in fact structurally simple, easy to use and may be easily adapted to pre-existing installations.

The invention thus devised may be subject to numerous modifications and variations, all of which fall within the scope of protection of the attached claims. Moreover, all the details may be replaced by other technically equivalent elements.

Where the operational characteristics and the techniques mentioned are followed by reference numbers or symbols, these reference numbers or symbols have been assigned with the sole purpose of facilitating understanding of the description and said claims and consequently they do not limit in any way the interpretation of each element which is identified, purely by way of example, by said reference numbers or symbols.

## Claims

1. Paddle wheel (10) for an apparatus for converting mechanical energy of a liquid flow wherein said paddle wheel (10) has a direction of rotation (A) and comprises:
- a hub (11) which defines an axis of rotation (B) for said paddle wheel (10);
- a plurality of arms (12) which are fixed to the hub (11) for transmitting to it an actuating stress and which each extend in a radial direction (C) with respect to said axis of rotation (B);
wherein at least a first one of said arms (12) has:
- an internal cavity (D)
- at least one circumferential opening (13) which is in fluid communication with said internal cavity (D) and which is configured to direct a fluid crossing it and flowing out of said internal cavity (D) so that this fluid causes a rotation of said paddle wheel (10) in said direction of rotation (A);
- at least one radial opening (14) which is in fluid communication with said internal cavity (D) and which extends in said radial direction (C).

2. Paddle wheel (10) according to Claim 1, wherein said first arm (12) comprises a deflector (15) which faces said radial opening (14) so as to deflect a fluid flow exiting said radial opening (14) so that said flow causes a rotation of said paddle wheel (10) in said direction of rotation (A).

3. Paddle wheel (10) according to Claim 2, wherein said circumferential opening (13) has a direction of extension which extends circumferentially with respect to said axis of rotation (B); said deflector (15) has a curved deflection surface (15a) which has a first end aligned with said radial opening (14) and a second end which extends in a substantially circumferential direction with respect to said axis of rotation (B).

4. Paddle wheel (10) according to one of the preceding claims, wherein said internal cavity (D) extends at least mainly in a radial direction with respect to said axis of rotation (B).

5. Paddle wheel (10) according to one of the preceding claims, wherein said at least one first arm of said arms (12) has a plurality of said internal cavities (D) where the internal cavities of said first arm (12) are arranged alongside each other along said axis of rotation (B).

6. Paddle wheel (10) according to Claim 5, wherein said first arm (12) comprises a plurality of tubes arranged alongside each other along said axis of rotation (B) and each defining internally said internal cavity (D).

7. Paddle wheel (10) according to Claim 6, wherein said tubes have an open end which defines said radial opening (14).

8. Paddle wheel (10) according to one of the preceding claims, wherein each of said arms (12) comprises at least one of said internal cavities (D).

9. Apparatus for converting mechanical energy of a liquid flow, comprising:
- a paddle wheel (10) according to one of the preceding claims;
- a user device designed to use a driving torque;
- a transmission unit mechanically connected to the hub (11) of said paddle wheel (10) and to said user device in order to transmit a driving torque from said hub (11) to said user device.

10. Milling plant comprising:
- a milling apparatus;
- a channel designed to convey a liquid flow;
- an apparatus for converting mechanical energy of a liquid flow, according to Claim 9, wherein a paddle wheel (10) of said conversion apparatus has said hub (11) connected to said milling apparatus and engages with said channel so as to intercept a fluid flow which flows along it so as to be driven by the latter along said direction of rotation (A).

11. Plant for the production of electrical energy comprising:
- a conversion apparatus designed to convert a driving torque into an electric voltage;
- a channel designed to convey a liquid flow;
- an apparatus for converting mechanical energy of a liquid flow, according to Claim 9, where a paddle wheel (10) of said conversion apparatus has said hub (11) connected to said conversion apparatus and engages with said channel so as to intercept a fluid flow which flows along it so as to be driven by the latter along said direction of rotation (A).

## Patentansprüche

1. Schaufelrad (10) für eine Vorrichtung zur Umwandlung mechanischer Energie eines Flüssigkeitsstroms, wobei das Schaufelrad (10) eine Drehrichtung (A) hat und Folgendes umfasst:
- eine Nabe (11), die eine Drehachse (B) für das Schaufelrad (10) definiert;
- eine Vielzahl von Armen (12), die an der Nabe (11) befestigt sind, um auf sie eine Betätigungskraft zu übertragen, und die sich jeweils in einer radialen Richtung (C) in Bezug auf die Drehachse (B) erstrecken;
wobei mindestens ein erster der Arme (12) Folgendes aufweist:
- einen inneren Hohlraum (D)
- mindestens eine Umfangsöffnung (13), die in Fluidverbindung mit dem inneren Hohlraum (D) steht und die so ausgebildet ist, dass sie ein Fluid leitet, das sie durchquert und aus dem inneren Hohlraum (D) strömt, so dass dieses Fluid eine Drehung des Schaufelrades (10) in der Drehrichtung (A) bewirkt;
- mindestens eine radiale Öffnung (14), die in Fluidverbindung mit dem inneren Hohlraum (D) steht und sich in der radialen Richtung (C) erstreckt.

2. Schaufelrad (10) nach Anspruch 1, wobei der erste Arm (12) eine Ablenkeinrichtung (15) aufweist, die der radialen Öffnung (14) zugewandt ist, um eine aus der radialen Öffnung (14) austretende Fluidströmung abzulenken, so dass die Strömung eine Drehung des Schaufelrades (10) in der Drehrichtung (A) bewirkt.

3. Schaufelrad (10) nach Anspruch 2, wobei die Umfangsöffnung (13) eine Erstreckungsrichtung aufweist, die sich in Bezug auf die Drehachse (B) in Umfangsrichtung erstreckt; die Ablenkeinrichtung (15) eine gekrümmte Ablenkfläche (15a) aufweist, die ein erstes Ende, das sich an die radiale Öffnung (14) anschließt, und ein zweites Ende aufweist, das sich in Bezug auf die Drehachse (B) in einer im Wesentlichen umlaufenden Richtung erstreckt.

4. Schaufelrad (10) nach einem der vorhergehenden Ansprüche, wobei sich der innere Hohlraum (D) zumindest hauptsächlich in einer radialen Richtung in Bezug auf die Drehachse (B) erstreckt.

5. Schaufelrad (10) nach einem der vorhergehenden Ansprüche, wobei der mindestens eine erste Arm der Arme (12) eine Vielzahl der inneren Hohlräume (D) aufweist, wobei die inneren Hohlräume des ersten Arms (12) nebeneinander entlang der Drehachse (B) angeordnet sind.

6. Schaufelrad (10) nach Anspruch 5, wobei der erste Arm (12) eine Vielzahl von Rohren umfasst, die entlang der Drehachse (B) nebeneinander angeordnet sind und jeweils im Inneren den inneren Hohlraum (D) bilden.

7. Schaufelrad (10) nach Anspruch 6, wobei die Rohre ein offenes Ende haben, das die radiale Öffnung (14) definiert.

8. Schaufelrad (10) nach einem der vorhergehenden Ansprüche, wobei jeder der Arme (12) mindestens einen der inneren Hohlräume (D) aufweist.

9. Vorrichtung zur Umwandlung mechanischer Energie eines Flüssigkeitsstroms, die Folgendes umfasst:
- ein Schaufelrad (10) nach einem der vorhergehenden Ansprüche;
- ein Benutzergerät, das zum Verwenden eines Antriebsmoments ausgelegt ist;
- eine Übertragungseinheit, die mechanisch mit der Nabe (11) des Schaufelrads (10) und mit dem Benutzergerät verbunden ist, um ein Antriebsmoment von der Nabe (11) auf das Benutzergerät zu übertragen.

10. Mahlanlage, die Folgendes umfasst:
- ein Mahlgerät;
- ein Kanal, der zur Förderung eines Flüssigkeitsstroms dient;
- eine Vorrichtung zur Umwandlung von mechanischer Energie eines Flüssigkeitsstroms nach Anspruch 9, wobei ein Schaufelrad (10) der Umwandlungsvorrichtung die Nabe (11) aufweist, die mit dem Mahlgerät verbunden ist und in den Kanal eingreift, um einen Fluidstrom abzufangen, der entlang des Kanals fließt, so dass es von diesem entlang der Drehrichtung (A) angetrieben wird.

11. Anlage zur Erzeugung von elektrischer Energie, die Folgendes umfasst:
- eine Umwandlungsvorrichtung, die dazu dient, ein Antriebsmoment in eine elektrische Spannung umzuwandeln;
- ein Kanal, der zum Fördern eines Flüssigkeitsstroms dient;
- eine Vorrichtung zur Umwandlung mechanischer Energie eines Flüssigkeitsstroms nach Anspruch 9,
wobei ein Schaufelrad (10) der Umwandlungsvorrichtung die Nabe (11) aufweist, die mit der Umwandlungsvorrichtung verbunden ist und in den Kanal eingreift, um einen Flüssigkeitsstrom abzufangen, der entlang des Kanals fließt, um von diesem entlang der Drehrichtung (A) angetrieben zu werden.

## Revendications

1. Roue à palettes (10) pour un appareil pour convertir l'énergie mécanique d'un flux de liquide, dans laquelle ladite roue à palettes (10) a une direction de rotation (A) et comprend :
un moyeu (11) qui définit un axe de rotation (B) pour ladite roue à palettes (10) ;
une pluralité de bras (12) qui sont fixés sur le moyeu (11) pour lui transmettre un effort d'actionnement et qui s'étendent chacun dans une direction radiale (C) par rapport audit axe de rotation (B) ;
dans laquelle au moins un premier desdits bras (12) a :
une cavité interne (D),
au moins une ouverture circonférentielle (13) qui est en communication de fluide avec ladite cavité interne (D) et qui est configurée pour diriger un fluide la traversant et s'écoulant hors de ladite cavité interne (D) de sorte que ce fluide provoque une rotation de ladite roue à palettes (10) dans ladite direction de rotation (A) ;
au moins une ouverture radiale (14) qui est en communication de fluide avec ladite cavité interne (D) et qui s'étend dans ladite direction radiale (C).

2. Roue à palettes (10) selon la revendication 1, dans laquelle ledit premier bras (12) comprend un déflecteur (15) qui fait face à ladite ouverture radiale (14) afin de dévier un flux de fluide sortant de ladite ouverture radiale (14) de sorte que ledit flux provoque une rotation de ladite roue à palettes (10) dans ladite direction de rotation (A).

3. Roue à palettes (10) selon la revendication 2, dans laquelle ladite ouverture circonférentielle (13) a une direction d'extension qui s'étend de manière circonférentielle par rapport audit axe de rotation (B) ; ledit déflecteur (15) a une surface de déviation courbée (15a) qui a une première extrémité alignée avec ladite ouverture radiale (14) et une seconde extrémité qui s'étend dans une direction sensiblement circonférentielle par rapport audit axe de rotation (B).

4. Roue à palettes (10) selon l'une des revendications précédentes, dans laquelle ladite cavité interne (D) s'étend au moins principalement dans une direction radiale par rapport audit axe de rotation (B).

5. Roue à palettes (10) selon l'une des revendications précédentes, dans laquelle ledit au moins un premier bras desdits bras (12) a une pluralité desdites cavités internes (D) où les cavités internes dudit premier bras (12) sont agencées les unes à côté des autres le long dudit axe de rotation (B).

6. Roue à palettes (10) selon la revendication 5, dans laquelle ledit premier bras (12) comprend une pluralité de tubes agencés les uns à côté des autres le long dudit axe de rotation (B) et définissant chacun intérieurement ladite cavité interne (D).

7. Roue à palettes (10) selon la revendication 6, dans laquelle lesdits tubes ont une extrémité ouverte qui définit ladite ouverture radiale (14).

8. Roue à palettes (10) selon l'une des revendications précédentes, dans laquelle chacun desdits bras (12) comprend au moins l'une desdites cavités internes (D).

9. Appareil pour convertir l'énergie mécanique d'un flux de liquide, comprenant :
une roue à palettes (10) selon l'une des revendications précédentes ;
un dispositif utilisateur conçu pour utiliser un couple d'entraînement ;
une unité de transmission mécaniquement raccordée au moyeu (11) de ladite roue à palettes (10) et audit dispositif utilisateur afin de transmettre un couple d'entraînement dudit moyeu (11) audit dispositif utilisateur.

10. Installation de broyage comprenant :
un appareil de broyage ;
un canal conçu pour transporter un flux de liquide ;
un appareil pour convertir l'énergie mécanique d'un flux de liquide, selon la revendication 9, dans lequel une roue à palettes (10) dudit appareil de conversion a ledit moyeu (11) raccordé audit appareil de broyage et se met en prise avec ledit canal afin d'intercepter un flux de fluide qui s'écoule le long de ce dernier afin d'être entraîné par ce dernier le long de ladite direction de rotation (A).

11. Installation pour la production d'énergie électrique comprenant :
un appareil de conversion conçu pour convertir un couple d'entraînement en une tension électrique ;
un canal conçu pour transporter un flux de liquide ;
un appareil pour convertir l'énergie mécanique d'un flux de liquide, selon la revendication 9, où une roue à palettes (10) dudit appareil de conversion a ledit moyeu (11) raccordé audit appareil de conversion et se met en prise avec ledit canal afin d'intercepter un flux de fluide qui s'écoule le long de ce dernier afin d'être entraîné par ce dernier le long de ladite direction de rotation (A).
